# EUROPEAN PATENT APPLICATION

(11) **EP 1 982 953 A1**
(43) Date of publication of application: **22.10.2008**
(21) Application number: 07388022.1
(22) Date of filing: 16.04.2007
(51) Int. Cl.: B67D 1/14, F16K 7/04

(54) **A dispensing line with an integral valve**

(71) Applicant: Carlsberg Breweries A/S, 1760 Copenhagen V (DK)
(72) Inventor: Rasmussen, Jan Norager, 3650 Olstykke (DK)
(74) Representative: Nielsen, Henrik Sten

(57) **Abstract**

A beverage dispensing line (10) made of an elastomeric material with a resilient integrated valve (11) which opens when deformed by an external force.

## Description

This invention relates to a dispensing line with an integral valve at the dispensing end of the dispensing line.

The applicant company produces and sells a draught beer system named DraughtMaster^{™}. In the DraughtMaster^{™} system, a chill chamber is included in which the keg or pack containing carbonate beer is received. The keg or pack containing carbonated beer comprises a flexible bottle or bag which is exposed to an elevated pressure from the outside for dispensing the beer. The flexible bottle or bag is connected through a dispensing line to a shut-off valve which is operated by means of a tap handle for operating the shut-off valve between an open and a closed position.

The shut-off valve of the dispensing line of the DraughtMaster^{™} system is a separate component which is fairly complicated to manufacture and is to be assembled with the dispensing line in a separate production step. The separate shut-off valve apart from fulfilling requirements as to compatibility with the tap handle of the DraughtMaster^{™} system fulfil specific operational requirements in particular to provide a safe closing-off and safe opening of the shut-off valve when operated by the tap handle, and, consequently, the shut-off valve must not allow the beer to leak or drip from the dispensing line, and, in addition, the shut-off valve should prevent that the beer is frothing when the shut-off valve is opened by operating the tap handle.

It is an object of the invention to provide a dispensing line with an integral valve.

Furthermore, it is an object that the integral valve be provided with an effective shut-off mechanism.

Additionally, it is an object to provide a dispensing line with an integral valve which valve has a small size so as to enable it to fit into e.g. an existing dispensing head.

Since the dispensing line, which can be placed and mounted in the dispensing head, is integrally provided with a shut-off valve, the controlled dispensing of a drink can be obtained. Especially if the drink is a carbonated drink, such as beer, undesired frothing is counteracted.

Furthermore, the flow characteristics through the dispensing line according to the invention can be adjusted by sizing the fluid outlet dimension of the dispensing line and accordingly the size and dimensions of the shut-off valve integral with the dispensing line.

The dispensing line according to the present invention is particularly suitable for dispensing beverages, e.g. wine, coffee, milk or carbonated drink, such as beer.

Furthermore, the dispensing line with the integral valve in some embodiments of the invention is by itself automatically closed when placing the pack containing carbonated drink in the dispenser device, so that leakage of carbonated drink is prevented.

The integral valve is likewise also automatically closed when the empty or partially empty pack is removed from the dispenser device and leakage of any beer present in the flexible dispensing line is prevented.

The dispensing line with the integral valve can be of rigid construction, but can also be telescopic or at least partially of a flexible construction. The latter is preferred since this facilitates the positioning and the retaining of the dispensing line with the integral valve in the dispensing head.

It is preferable to make the dispensing line and the valve integral therewith of an elastomeric material so that the line with the integral valve constitutes a disposable or semi-disposable item that can be thrown away minimising any harming to the environment. Furthermore, by the use of elastomeric material, the dispensing line with the integral valve is easily manufacturable in a moulding process.

The dispensing line with the integral valve can be permanently connected to the container containing a carbonated drink. Alternatively, the dispensing line with the integral valve may constitute a separate set which is provided with a coupling for detachable connection to the keg or pack. Consequently, the dispensing line with the integral valve may constitute a lightweight, simple construction which can easily be accommodated, stored and transported in or together with the keg or the pack. The dispensing line with the integral valve may be accommodated in a coiled state on top of or beneath the base of the keg or pack containing.

When connecting a fresh keg or pack and the associated dispensing line with the integral valve to the draught beer system or the drink dispensing assembly, the shut-off valve integral with the flexible dispensing line can easily be pushed through any guide tube or guide bore to the dispensing head.

The operating element of the dispensing head preferably comprises components or elements to which the dispensing line with the integral valve is connected. The shut-off valve may be provided with corresponding coupling components or elements and may be operated by e.g. applying a force to it.

The integral valve of the dispensing line is opened and closed by operating the handle. The integral valve and the dispensing line, formed as one item e.g. during moulding, is made of an elastomeric material. The term elastomer or elastomeric is to be construed a generic term including any natural or synthetic rubber composition or derivation or derivations thereof and/or combinations thereof.

### Examples of elastomers are:

Unsaturated rubbers that can be cured by sulphur vulcanisation:
- Natural Rubber NR
- Polyisoprene (IR)
- Butyl rubber (copolymer of isobutylene and isoprene, IIR)
- Halogenated butyl rubbers (Chiaro Butyl Rubber: CIIR; Bromo Butyl Rubber: BIIR) Polybutaniene (BR)
- Styrene-butadiene Rubber (copolymer of polystyrene and polybutadiene, SBR) Nitrile Rubber (copolymer of polybutadiene and acrylonitrile, NBR), also called buna N rubbers
- Hydrated Nitrile Rubbers (HNBR) Therban® and Zetpol®

Chloroprene Rubber (CR), polychloroprene, Neoprene, Baypren etc. Saturated Rubbers that cannot be cured by sulfur vulcanization:
- EPM (ethylene propylene rubber, a copolymer faeces of polyethylene and polypropylene) and EPDM rubber (ethylene propylene diene rubber, a terpolymer of polyethylene, polypropylene and a diene-component)
- Epichlorohydrin rubber (ECO)
- Polyacrylic rubber (ACM, ABR)
- Silicone (SI, Q, VMQ)
- Fluorosilicone Rubber (FVMQ)
- Fluoroelastomers (FKM, FPM) Viton®, Tecnoflon®, Fluorel® and Dai-EI® Perfluoroelastomers (FFKM)Kalrez®
- Polyether Block Amides (PEBA)
- Tetrafluoro ethylene/propylene rubbers (FEPM)
- Chlorosulfonated Polyethylene (CSM), (Hypalon®)
- Ethylene -vinyl acetate (EVA)
- Various other types of elastomers:

- Thermoplastic Elastomers (TPE), for example Hytrel ®, etc. Thermoplastic Vulcanizates (TPV), for example Santoprene® TPV Polyurethane rubber
- Resilin, Elastin
- Polysulfide Rubber

Thermoplastic elastomers (TPE), sometimes referred to as thermoplastic rubbers, are classes of copolymers which classes comprise materials with both thermoplastic and elastomeric properties. While most elastomers are thermosets, thermoplastics are relatively easy to use in manufacturing, for example, by injection moulding.

Thermoplastic elastomers exhibit advantages as rubbery materials and plastic materials.

The following methods may be applied to moulding thermosets: Injection moulding, extrusion moulding (typically used for making pipes, threads of fabric and insulation for electrical cables), calendering, compression moulding and blow moulding.

The above objects, the above advantage, and the above feature together with numerous other objects, advantages, and features, which will be evident from the below detailed description of the present invention, are, in accordance with a first aspect of the present invention, obtained by

The 5 independent aspects of the invention will be explained in more detail below in connection with advantageous embodiments of the invention with reference to the drawings, in which
Fig. 1 shows a prior art drink dispenser assembly named DraughtMaster^{™},
Fig. 2 shows a prior art tap handle and a dispensing line of the prior art drink dispenser assembly named DraughtMaster^{™},
Fig. 3 shows an inner operating mechanism of the tap handle also shown in Fig. 2,
Fig. 4 shows an inner operating mechanism of the tap handle with a first embodiment of the dispensing line with the integral valve according to the invention,
Figs. 5a, 5b, 5c and 5c show the first embodiment of the dispensing line with the integral valve according to the invention,
Fig. 6 shows an inner operating mechanism of the tap handle with a second embodiment of the dispensing line with the integral valve according to the invention,
Figs. 7a, 7b, 7c and 7d show the second embodiment of the dispensing line with the integral valve according to the invention,
Fig. 8 shows an inner operating mechanism of the tap handle with a third embodiment of the dispensing line with the integral valve,
Figs. 9a, 9b and 9c show the third embodiment of the dispensing line with the integral valve,
Figs. 10, 10a and 10b show a fourth embodiment of the dispensing line with the integral valve,
Figs. 11a and 11b show a fifth embodiment of the dispensing line with the integral valve,
Figs. 12a and 12b show a sixth embodiment of an embodiment of the dispensing line with the integral valve.

Throughout the below description and in the drawings, identical components or elements present in different figures of the drawings are designated the same reference numerals, and components or elements differing from a previously described component or element, respectively, however serving basically the same functional purpose as the previously described component or element, respectively, are designated the same reference numeral as the previously described component or element, respectively, however added a marking for indicating the geometrical difference from the previously described component or element, respectively.

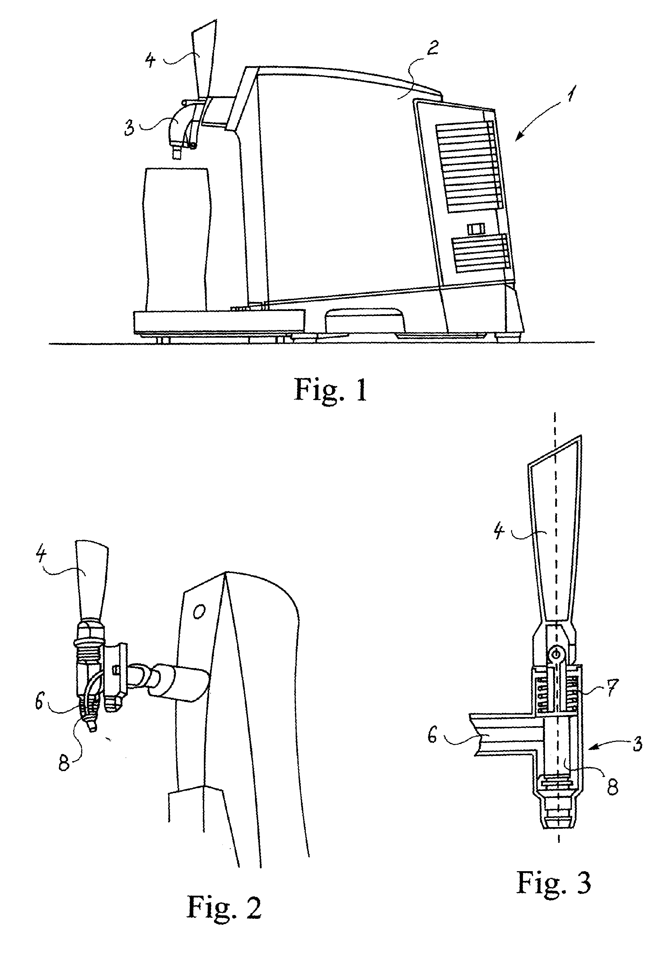

Fig. 1 illustrates a prior art drink dispenser assembly. The dispenser device assembly 1 comprises a housing 2 including a chill chamber in which a keg or pack, not shown in the drawings, containing carbonated beer is placed. The keg or pack containing carbonated beer comprises a flexible bottle or bag containing the carbonated beer. The flexible bottle or bag is connected through a dispensing line to a shut-off valve at the dispensing end of the dispensing ling. By means of a dispensing head 3 acting as a faucet and a tap handle 4, the shut-off valve is operated between an open position and a closed position.

Figs. 2 and 3 illustrate the tap handle 4 and a dispensing line 6 with a shut-off valve 8. The dispensing line 6 is positioned in the interior of the dispensing head and the shut-off valve 8 is biased by a spring 7 to its closed position whereas operation of the handle 4 causing compression of the biasing spring 7 moves the shut-off valve 8 to its open position.

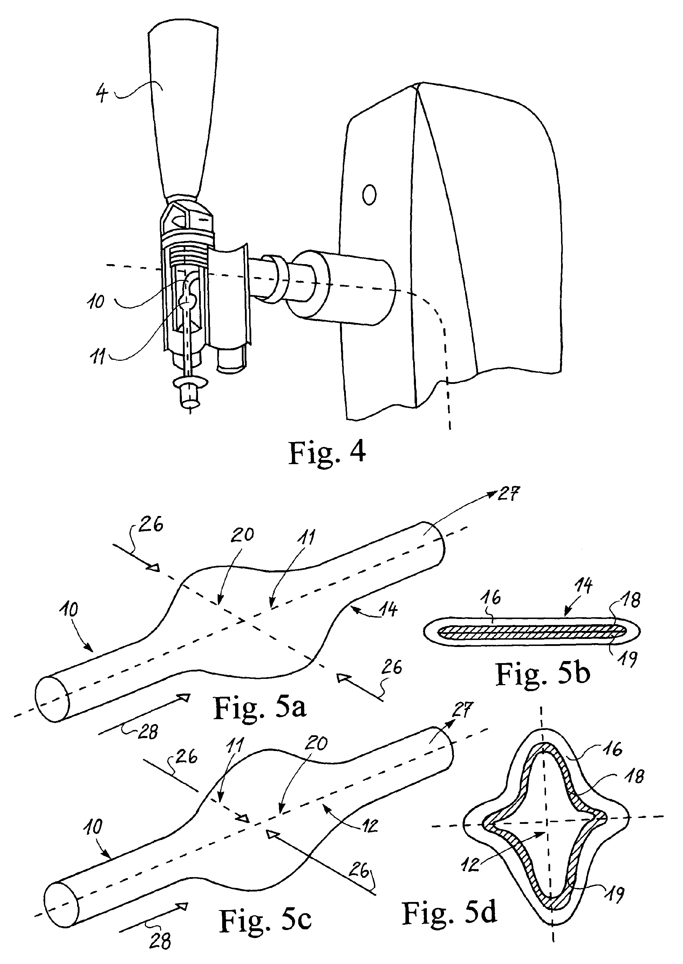

Fig. 4 illustrates an inner operating mechanism of the tap handle 4 and a first embodiment of a dispensing line 10, including an integral valve 11 also shown in Figs. 5a, 5b, 5c and 5d. The dispensing line 10 is made of an elastomeric material and has an integral valve 11 at the dispensing end of the dispensing line 10. The valve 11 comprises a segment defining a longitudinal direction indicated by an arrow 28 and a central point 20.

In Figs. 5a and 5b, constituting a perspective view and a vertical sectional view, respectively, the segment constituting the integral valve 11 of the first embodiment of the dispensing line 10 is closed, and in Figs. 5c and 5d, constituting a perspective view and a vertical sectional view, respectively, the segment is opened allowing beer to flow in the longitudinal direction as indicated by the arrow 28 through the segment and to be dispensed from a fluid outlet 27.

In the first embodiment of the dispensing line 10 including the integral valve 11, the segment 11 constituting the integral valve is in its closed position when relaxed as illustrated in Figs. 5a and 5b, and is shifted to its opened position shown in Figs. 5c and 5d provided the segment is compressed in a transversal direction as indicated by a set of arrows 26 directed towards the central point 20. In an alternative variant of the first embodiment of the dispensing line 10 with the integral valve constituted by the segment 11, the valve constituted by the segment 11 is in its open position shown in Figs. 5c and 5d when relaxed and is caused to be shifted from its open position shown in Figs. 5c and 5d into its closed position shown in Figs. 5a and 5b by stretching the segment longitudinally by applying oppositely directed forces relative to the central point 20 to the segment 11 for pushing opposite ends of the segment, thereby causing the segment to be compressed and shifting the segment into its closed position shown in Figs. 5a and 5b.

Further alternatively, it is contemplated that the above described first variant of the first embodiment of the dispensing line 10 including the integral valve constituted by the segment 11 may be shifted from its relaxed, closed position shown in Figs. 5a and 5b into its open position shown in Figs. 5c and 5d by compressing the segment, i.e. by applying compressive forces towards one another relative to the central point 20 of the segment along the longitudinal direction of the segment.

The elastomeric material of the segment 11, comprises three layers 16, 18 and 19, an outer surrounding layer 16 and two inner layers 18 and 19. The outer layer, i.e. the surrounding layer 16 is elastic allowing the layer 16 to return to its original relaxed state and includes elastic memory, i.e. includes the ability to return after deformation to its original relaxed state constituting the closed position shown in Figs. 5a and 5b, or alternatively, as described above, the open position shown in Figs. 5c and 5d. The two inner layers 18 and 19 are softer than the outer layer 16 and form a lip seal when contacting one another. The lip seal is so effective that it blocks the fluid outlet 27, when the segment is in its closed position as shown in Figs. 5a and 5b.

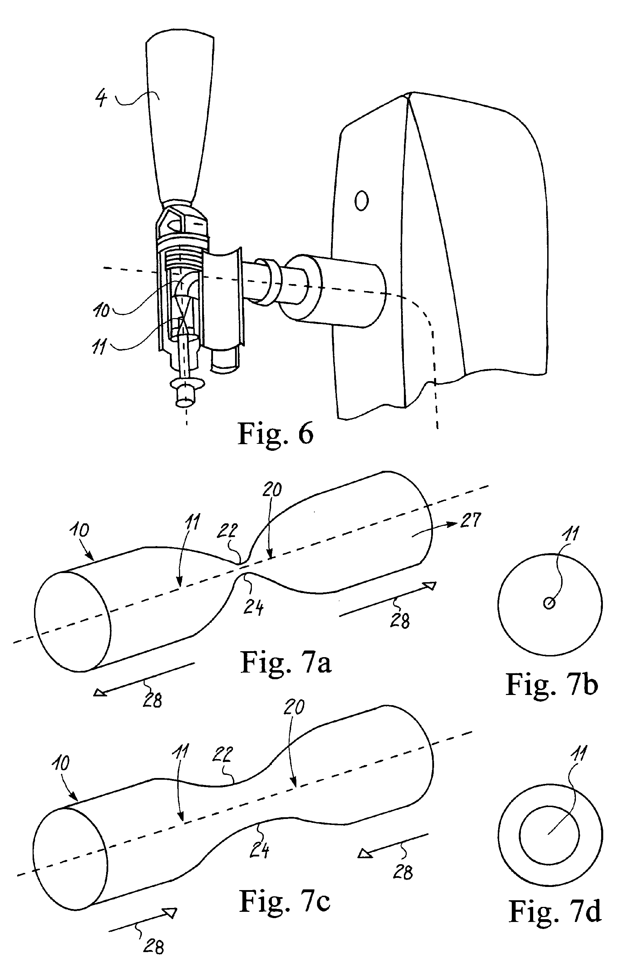

Fig. 6 illustrates an inner operating mechanism of the tap handle 4 and a second embodiment of a dispensing line 10' including an integral valve 11' also shown in Figs. 7a, 7b, 7c and 7d.

The dispensing line 10' is made of an elastomeric material and has an integral valve 11' at the dispensing end of the dispensing line 10'. The valve 11' comprises a segment defining a longitudinal direction along sets of arrows 28' shown in Figs. 7a and 7c. In Figs. 7a and 7b, constituting a perspective view and a vertical sectional view, respectively, the segment constituting the integral valve 11' of the second embodiment of the dispensing line 10' is closed, and in Figs. 7c and 7d, constituting a perspective view and a vertical sectional view, respectively, the segment 11' is opened allowing beer to flow in the longitudinal direction of the segment and to be dispensed from a fluid outlet 27'.

In the second embodiment of the dispensing line 10' including the integral valve 11', the segment 11' constituting the integral valve is in its closed position when relaxed as illustrated in Figs. 7a and 7b, and is shifted to its open position shown in Figs. 7c and 7d, provided the segment is compressed in a longitudinal direction as indicated by the arrows 28' in Fig. 7c providing a longitudinal compression of the segment, thereby opening the segment.

In an alternative variant of the second embodiment of the dispensing line 10' with the integral valve constituted by the segment 11', the valve constituted by the segment 11' in its open position shown in Figs. 7c and 7d when relaxed and is caused to be shifted from its open position shown in Figs. 7c and 7d into its closed position shown in Figs. 7a and 7b by stretching the segment longitudinally by applying oppositely directed forces relative to the segment and pulling the segment longitudinally by applying oppositely directed forces as indicated by the arrows 28' shown in Fig. 7a.

Like the above described first embodiment of the dispensing line 10 including the integral valve 11, the second embodiment of the dispensing line 10' including the integral valve 11' shown in Figs. 7a-7d may be made from a composite foil structure comprising outer and inner foil layers, in which the inner layer or layers constitute or constitutes a soft layer providing the sealing off of the segment 11' in the closed position shown in Figs. 7a and 7b whereas the outer layer includes elastic memory for causing the segment to revert to its relaxed position being the closed position shown in Figs. 7a and 7b or the open position shown in Figs. 7c and 7d in the variant of the embodiment described above.

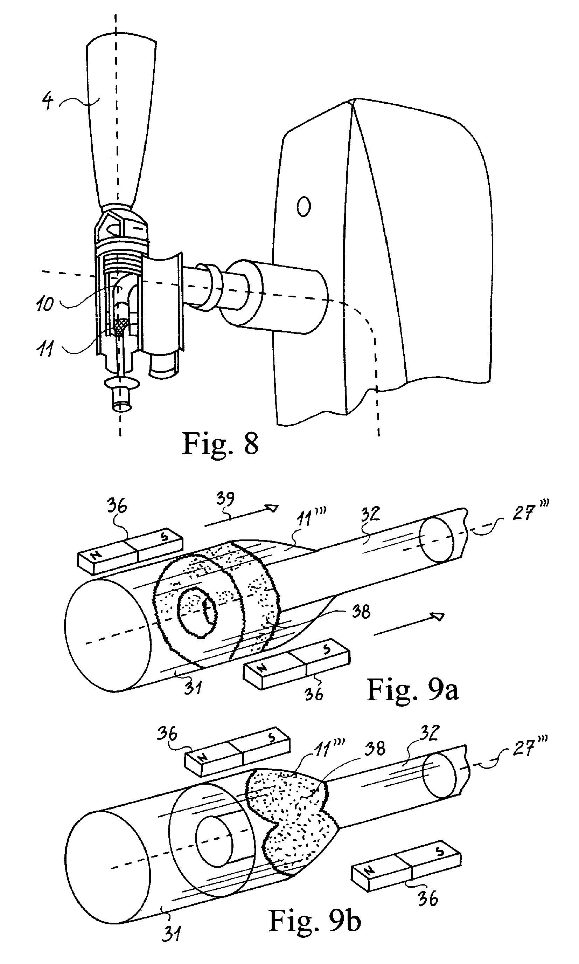

Fig. 8 illustrates an inner operating mechanism of the tap handle 4 operating and a third embodiment of a dispensing line 10''' with the integral valve 11''' provided at the dispensing end of the dispensing line 10"'.

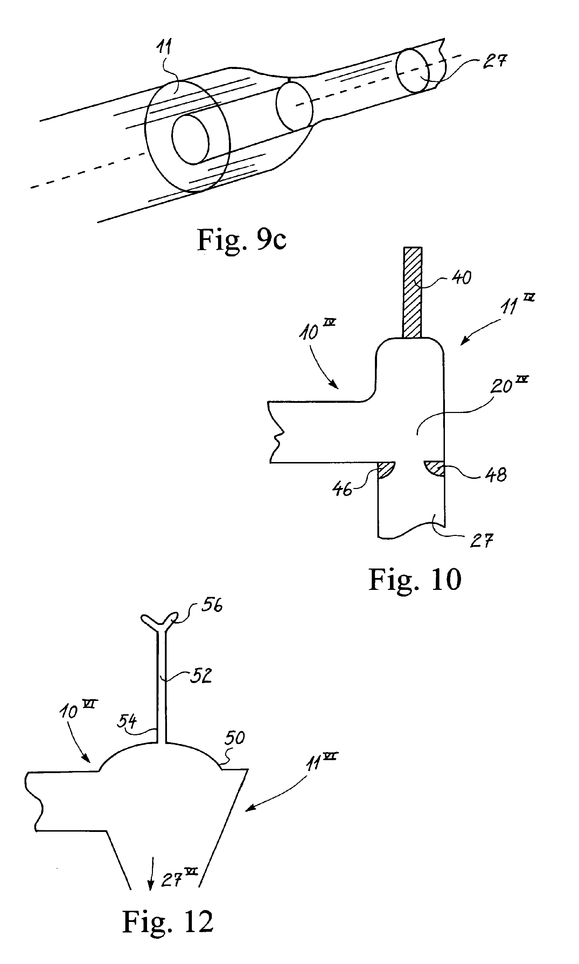

Figs. 9a, 9b and 9c illustrate the third embodiment of a dispensing line 10''' made of an elastomeric material with the integral valve 11''' and a magnet assembly 36. The valve 11''' comprises two parts or segments, a first part or segment designated the reference numeral 31 and a second part or segment designated the reference numeral 32. The first part 31 constitutes an inlet to the valve 11''', and the second part 32 defines a somewhat reduced diameter compared to the first part 31 and defines the outlet 27'''. Within the valve 11''', a closure body constituted by a body of magnetic oil 38 is included which is preferably contained within a highly flexible elastomeric membrane or a wall located at the transition between the first part 31 and the second part 32. The magnetic oil 38 is shiftable within the valve 11''' by means of the magnet assembly 36 which is preferably constituted by a plurality of magnets located on a circular cylindrical surface juxtaposed the transition between the first part 31 and the second part 32 of the valve 11''' or alternatively is constituted by a ring-shaped circumferentially enclosing magnetic body. Further alternatively, the magnet assembly 36 or the above described ring-shaped magnet may be substituted by an electromagnetic assembly which is connected to a DC power source for generating a magnetic field serving like the permanent magnets of the magnet assembly 36 or alternatively the ring-shaped magnet to influence the magnetic oil 38 and cause the magnetic oil to be shifted from its position shown in Fig. 9a to its position shown in Fig. 9b.

In Fig. 9a, the magnetic oil is located behind the transition between the first part 31 and the second part 32 allowing fluid to pass through the valve, i.e. allowing beer to be dispensed from the outlet 27''' whereas in Fig. 9b, the magnet assembly 36 is shifted forwards relative to the valve 11''' causing the magnetic oil 38 to be shifted into the transition between the first part 31 and the second part 32 and causing the film or membrane within which the magnetic oil is confined to close off the passage at the transition between the first part 31 and the second part 32.

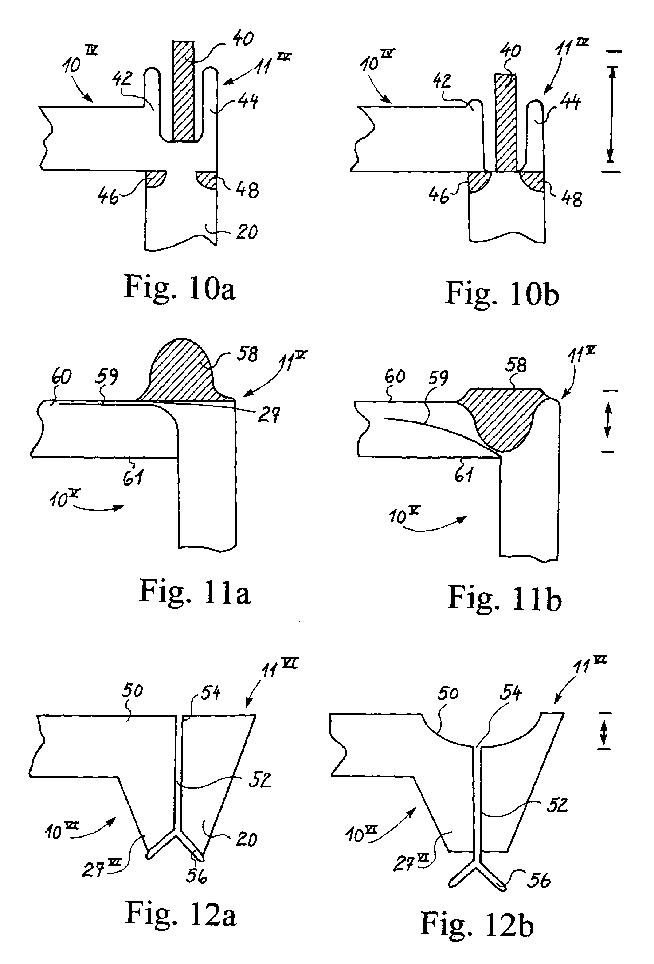

Figs. 10, 10a and 10b illustrate a fourth embodiment of the dispensing line 10^{iv} made of an elastomeric material with the integral valve 11^{iv}. Figure 10 illustrates the dispensing line 10^{iv} in its state after its manufacture, e.g. after being moulded from an elastomeric material. In this state a movable element 40 is not yet everted. In Figs. 10a and 10b the movable element 40 is shown everted into its operational states. The dispensing line 10 is shown in its two distinct normal operational states in Figs. 10a and 10b, namely open and closed, respectively.

The dispensing line 10^{iv} in general comprises a tubular segment 11^{iv} made of the same elastomeric material as the dispensing line 10^{iv}. The tubular segment 11^{iv} defines the fluid outlet 27^{iv} and a central point 20. The movable element 40 defines a direction of movement towards a central point 20^{iv} and is integrally connected to the tubular segment 11^{iv} by means of a pair of stretchable walls 42 and 44. The walls 42 and 44 are initially in a non-stretched state as shown in Fig. 10a. The movable element 40, when subjected to a force in the direction of the movement towards the central point 20, stretches the pair of walls 42 and 44 causing the movable element 40 to be contacted with a pair of seat points 46 and 48 and thereby shuts off the fluid outlet 27^{iv}. Conversely, the movable element 40 when not subjected to any forces allows the walls 42 and 44 to return to their initial non-stretched state and thereby the fluid outlet 27^{iv} is opened.

Figs. 11 a and 11 b illustrate a fifth embodiment of the dispensing line 10^{v} made of an elastomeric material with the integral valve 11^{v}. The valve comprises a tubular segment defining the fluid outlet 27^{v} and is made, e.g. moulded of an elastomeric material. The tubular segment comprises a movable element 58 and a membrane 59. The membrane 59 has an elastic property and a position initially allowing the fluid outlet 27^{iv} to be open as is shown in Fig. 11 a. The movable element 58 is made, e.g. moulded, integral with a sidewall 60 of the tubular segment.

The element 58, when subjected to a force in a downwards towards the fluid outlet 27^{iv}, forces the membrane 59 to be moved to block the fluid outlet 27^{iv}. Alternatively, when the movable element 58 is not subjected to any force, the element 58 is returned to its initial state shown in Fig. 11a due to its elastic property and opens up the fluid outlet 27^{iv}.

The membrane 59 is fixed at its one end to a sidewall 61 opposite to the sidewall 60. The membrane 59 is fixed to the sidewall 61 by means of a suitable process such as welding, gluing or is preferably integrally moulded with the tubular segment forming part of the dispensing line 10^{v}. The movable element 58 may initially as shown in Fig. 11 a be in a non-everted state, and as shown in Fig. 11 be forced into the everted state. The movable element 58 is of a massive elastomeric material.

Figs. 12, 12a and 12b illustrate a sixth embodiment of the dispensing line 10^{vi} made of an elastomeric material with the integral valve 11^{vi}. Like the above described fourth embodiment of the dispensing line 10^{iv} with the integral valve 11^{iv} shown in Figs. 10, 10a and 10b, the sixth embodiment of the dispensing line 10^{vi} with the integral valve 11^{vi} shown 12, 12a and 12b is initially produced in a non-everted state as is shown in Fig. 12 in which a dome-shaped wall part 50 is located opposite to the fluid outlet 27^{vi}. From the dome-shaped wall part 50, a hollow shaft 52 extends which hollow shaft 52 defines a proximal end 54 at the outer surface of the dome-shaped wall part 50 and a distal end at which a hollow Y-shaped closure body 56 is provided.

After the manufacture of the integral valve 11^{vi} of the dispensing line 10^{vi}, the hollow shaft 52 and the Y-shaped closure body 56 is everted and by the eversion of the hollow shaft 52 and the hollow Y-shaped closure body 56, the dome-shaped wall part 50 is deformed into a substantially planar configuration as shown in Fig. 12a biasing the everted Y-shaped closure body 56 into engagement with the outer end walls of the fluid outlet 27^{vi} closing off the fluid outlet 27^{vi}.

In Fig. 12a, the valve 11^{vi} is closed as the wall part 50 forces the closure body 56 into sealing engagement with the fluid outlet 27^{vi} due to the biasing effect as the wall part 50 is bent from its initial convex dome-shaped configuration as shown in Fig. 12 into its substantially planar deformed configuration shown in Fig. 12a.

In Fig. 12b, the valve 11^{vi} is opened as the wall part 50 is further deformed and forced downwardly causing the closure body 56 to be disengaged from its sealing engagement with the fluid outlet 27^{vi}, consequently allowing beer to be dispensed from the fluid outlet 27^{vi}.

Although the present invention has above been described with reference to advantageous and presently preferred embodiments of the different aspects of the invention, numerous modifications and changes of the above described presently preferred embodiments may be deduced and all such modifications and changes perceivable by a person having ordinary skill in the art are consequently to be considered part of the present invention, the protective scope of which is to be interpreted in accordance with the below patent claims.

## Claims

1. A dispensing line (10) made of a elastomeric material with an integral valve (11), said integral valve (11) comprising a segment made of an elastomeric material, said segment defining a fluid outlet (27),
said segment being open for fluid passage through said fluid outlet (27) in one operational condition, and
said segment restricting the fluid passage through said fluid outlet (27) in another, different operational condition.

2. The dispensing line (10) according to claim 1, said segment of said integral valve (11) defining an longitudinal direction and a central point (20), said segment being open for fluid passage in said longitudinal direction through said fluid outlet (27) and formed as a tubular element (12) when subjected to forces (26, 28) in a direction orthogonal to said longitudinal direction and towards said central point (20), and
said segment returning to and formed as a substantially flat element (14) restricting the passage through said fluid outlet (27) when subjected to no forces.

3. The dispensing line (10) according to claim 2, said elastomeric material of said segment comprising three layers (16, 18, 19)
including an outer surrounding layer (16) and two inner layers (18,19),
said outer layer (16) being elastic allowing it to return after a deformation, and two said inner layers (18, 19) being softer than said outer layer (16) so as to allow said inner layers (18, 19) when contacting one another to form a lip seal so as to effective block said fluid outlet (27), when said segment being in its form of said flat element (14).

4. The dispensing line (10) according to claim 1,
said segment defining a longitudinal direction and a central point (20), said segment initially restricting said fluid passage in that said elastomeric material being so elastic that said segment contracts itself into an hour glass shape by means of initially contracted side-walls (22, 24),
said segment being open for fluid passage through a fluid outlet (27) in said longitudinal direction when subjected to forces (26, 28) extending in said longitudinal direction away from said central point (20) in that said forces (26, 28) drawing said side-walls (22, 24) from one another whereby said fluid outlet (27) being opened, and
said segment restricting fluid passage when not subjected to forces in that said segment contracts itself by contracting said side-walls (22,24) to their initial position whereby said fluid passage (27) being blocked and closed off.

5. The dispensing line (10) according to claim 1,
said segment defining an longitudinal direction and a central point (20), said segment initially forming an hour glass shape and allowing said fluid passage through a fluid outlet (27) defined by opposite, initially separated side-walls (22,24), and
said segment restricting said fluid passage in said longitudinal direction when subjected to forces (26, 28) extending in said longitudinal direction towards said central point (20) in that said forces (26, 28) forcing said side-walls (22,24) against one another, whereby said fluid outlet (27) being blocked and closed off.

6. A dispensing line (10) made of a elastomeric material with an integral valve,
said integral valve comprising a tubular segment (30) made of an elastomeric material and a magnet assembly (36),
said tubular segment (30) defining a longitudinal direction and a fluid outlet (27) in said longitudinal direction, said tubular segment (30) comprising a first part (31) having a first cross sectional area and a second part (32) having a smaller second cross sectional area,
said integral valve comprising magnetisable oil (38) in a bag being distributed as a ring shaped element in said first part (31) of said tubular element (30) along the inner surfaces thereof,
said tubular segment (30) being open for fluid passage through said fluid outlet (27), when said magnetisable oil (38) is subjected to magnetic forces from said magnet (36) being located around said first part (31) or when said magnetisable oil (38) is not subjected to any forces,
said tubular segment (30) is restricted for fluid passage through said fluid outlet (27), in a first and a second configuration:
said first configuration, when said magnetisable oil (38) being subjected to magnetic forces forcing said ring shaped element to be moved from said first part (31) to said second part (32), and
said second configuration, in a relative movement of said second part (32) of said tubular segment (30) towards a position where said magnet (36) is located around said second part (32), whereby in both configurations said fluid outlet (27) in said second part (32) of said tubular segment (30) being blocked by means of a deformation of said ring shaped element when located in said second part (32).

7. The dispensing line (10) according to claim 6, said magnet assembly (36) being ring shaped.

8. The dispensing line (10) according to claim 6, said magnet assembly (36) comprising a pair of magnets.

9. A dispensing line (10) made of an elastomeric material with an integral valve, said integral valve comprising:
a segment of said dispensing line defining a fluid outlet (27), and a movable closure body (40) movable between a first position and a second position, said closure body (40) being movable between a first position and a second position, said closure body (40) being positioned in engagement with said fluid outlet (27) and closing off said fluid outlet (27) in said first position, and
said closure body (40) being disengaged from said fluid outlet (27) in said second position.

10. A dispensing line (10) made of an elastomeric material with an integral valve, said integral valve comprising a tubular segment defining a fluid outlet (27) and made of an elastomeric material, said tubular segment comprising a movable element (58) and a membrane (59) having an elastic property and a position initially allowing said fluid outlet (27) to be open,
said movable element (58) defining a direction of movement and being integral with a side wall (60) of said tubular segment,
said movable element (58), when subjected to a force in the direction of said movement, moving said membrane (59) so as to close off said fluid outlet (27), and said movable element (58), when subjected to no forces, allowing said movable element (58) to return to its initial state whereby said membrane (59) due to said elastic property returns to said initial position so as to open up said fluid outlet (27).

11. The dispensing line (10) according to claim 10, said membrane (59) being fixed at its one end to a side wall (61) opposite said side wall (60).

12. The dispensing line (10) according to claim 10, said fixing being welding, gluing or an integral moulding process with said tubular segment.

13. The dispensing line (10) according to claim 10, said movable element (58) initially in a non-everted state, being massive and evertable.

14. The dispensing line (10) according to claim 10. said said movable element (58) being manufactured integrally with said dispensing line in a non-everted position.

15. A dispensing line (10) made of an elastomeric material with an integral valve, said integral valve comprising:
a tubular segment of said dispensing line having an elastic, dome-shaped wall part (50) and a fluid outlet (27),
a movable element having an elongated shaft (52) defining a distal end (56) and a proximal end (54), and a closure body (57) at said distal end (56), said movable element being connected at said proximal end (54) to said dome-shaped wall part (50),
said closure body (57) being movable between a first position and a second position, said closure body (57) being positioned in engagement with said fluid outlet (27) and closing off said fluid outlet (27) in said first position, said closure body (57) being disengaged from said fluid outlet (27) in said second position, and said elastic, dome-shaped wall part (50) biasing said closure body (50) to said first position or to said second position.

16. The dispensing line (10) according to claim 15, said closure body (57) being T shaped.

17. The dispensing line (10) according to claim 15, said closure body (57) being V shaped.

18. The dispensing line (10) according to claim 15, said closure body (57) being spherically formed.

19. The dispensing line (10) according to claim 15, said closure body (57) being massive.

20. The dispensing line (10) according to claim 15, said closure body (57) being manufactured integrally with said dispensing line in a non-everted position.

21. A method of producing the dispensing line including the integral valve according to any of the claims 10-20, the method comprising:
casting or moulding said segment of said dispensing line in a convex configuration, and
everting said segment into a partially concave configuration for producing said membrane or said dome-shape wall part.
